(19) Europäisches Patentamt / European Patent Office / Office européen des brevets

(11) **EP 1 388 291 B1**

(12) **EUROPEAN PATENT SPECIFICATION**

(45) Date of publication and mention
of the grant of the patent:
**11.07.2007 Bulletin 2007/28**

(51) Int Cl.:
*A23C 19/064* (2006.01)   *A23C 19/06* (2006.01)
*A01J 25/00* (2006.01)   *G01N 21/35* (2006.01)

(21) Application number: **03077396.4**

(22) Date of filing: **30.07.2003**

(54) **Method and apparatus for preparing cheese from milk**

Verfahren und Vorrichtung zur Herstellung von Käse aus Milch

Procédé et installation pour préparation de fromage à partir de lait

(84) Designated Contracting States:
**AT BE BG CH CY CZ DE DK EE ES FI FR GB GR HU IE IT LI LU MC NL PT RO SE SI SK TR**

(30) Priority: **07.08.2002 NL 1021232**

(43) Date of publication of application:
**11.02.2004 Bulletin 2004/07**

(73) Proprietor: **Friesland Brands B.V.**
**7943 PE Meppel (NL)**

(72) Inventors:
• **Cruijsen, Johannes Martinus Maria**
**8925 EE Leeuwarden (NL)**
• **Bastiaans, Johannes Adrianus Henricus Petrus**
**3823 DP Amersfoort (NL)**
• **Flapper, Domenicus Jitte**
**8421 RD Oldeberkoop (NL)**
• **van Arem, Everhardus Jacobus Franciscus**
**8802 CR Franeker (NL)**

(74) Representative: **Prins, Adrianus Willem et al**
**Vereenigde,**
**P.O.Box 87930**
**2508 DH Den Haag (NL)**

(56) References cited:
EP-A- 0 038 254       EP-A- 0 487 733
EP-A- 0 668 020       FR-A- 2 663 747

• DAHLIN E B ET AL: "(In 'Proceedings from the second biennial Marschall International Cheese Conference' G((see FSTA (1983) 15 G11 P1569)).)" 1981 ZIKONIX CORP., 224, SANTA ANA COURT, SUNNYVALE, CALIFORNIA 94086, USA, pages 362-368, XP008015305

• MILLARD J: "Close control of moisture content and other parameters for optimization of production processes." FOOD MARKETING & TECHNOLOGY 16 (4) 33-34, 36 2002 NDC INFRARED ENGINEERING, BATES RD., MALDON CM9 5FA, UK, August 2002 (2002-08), XP008015285

• ANONYMOUS: "Testing times down under." DAIRY INDUSTRIES INTERNATIONAL 1996 CORRESPONDENCE ADDRESS, INFRARED ENGINEERING, GALLIFORD RD., THE CAUSEWAY, MALDON, CM9 7XD, UK. TEL. (+44) 1621 852244. FAX (+44) 1621 856180, vol. 61, no. 4, page 21 XP008015286

• DATABASE FSTA [Online] INTERNATIONAL FOOD INFORMATION SERVICE (IFIS), FRANFURT/MAIN, DE; BRENNE E: "Near infrared analysis. General principles and potential use in the dairy industry." Database accession no. 87-1-04-p0039 XP002235907 & MEIERIPOSTEN 1984, vol. 73, no. 14/15, pages 410-413,

• DATABASE FSTA [Online] INTERNATIONAL FOOD INFORMATION SERVICE (IFIS), FRANFURT/MAIN, DE; SORENSEN L K ET AL: "Assessment of sensory properties of cheese by near-infrared spectroscopy." Database accession no. 1999-00-p1350 XP002235908 & INTERNATIONAL DAIRY JOURNAL 8 (10/11) 863-871 1998 STEINS LABORATORIUM, LADELUNDVEJ 85, 6650 BRORUP, DENMARK,

EP 1 388 291 B1

**Description**

The invention relates to a method for preparing cheese, in particular hard or semi-hard type cheese. The invention also relates to an apparatus for preparing cheese. In particular, the aim is directed to the quality and the efficiency in a continuous cheese preparation process.

Methods and apparatuses for pre-preparing cheese are widely known from practice. In general, cheese is prepared by preparing a mixture of curd and whey from milk with rennet, subsequently draining the whey, and then forming young cheese from the curd.

Cheese particularly consists of the solid constituents of milk: fat, proteins, vitamins, and minerals. This also appears from the decrease of the volume. Approximately ten kilos of milk are required to make one kilo of cheese. Subsequently, the young cheese may be subjected to a brine treatment by bringing it into a brine bath for some time. After it has undergone a brine treatment, the young cheese is usually stored in a cheese warehouse to undergo a controlled ripening process.

The composition of the cheese changes during the process. The amount of moisture sinks from the start of the process after forming, subsequently in the brine bath, and then during the ripening. A four weeks old Gouda cheese contains approximately 60 percent dry matter.

On an industrial scale, a (large) number of cheeses is prepared in batches simultaneously, at least: within a short time span. In spite of the batchwise approach, however, the preparation process in general, and the ripening process in particular, is different for each cheese in the batch. In particular, there is variation in the moisture content of each cheese, which is co-dependent on the direct ambient conditions, such as temperature and relative humidity. Moreover, the ripening process of each individual cheese in the batch is dependent on the storage position in the warehouse. During the ripening process of a batch of cheeses in the mentioned warehouse, therefore, cheeses regularly change storage position so as to obtain in the batch as most uniform a quality of the cheeses as possible.

During the cheese preparation, a good control of the moisture content in each cheese is of high importance. This is because the moisture content is of great influence to the quality and the efficiency in the cheese preparation. To get this aspect of the cheese preparation under control on an industrial scale, a detailed cheese management system is used in the industrial practice. According to this system, there is made per batch, at an early stage, before the young cheese undergoes the brine treatment, a prediction of the moisture content of the young cheese when it is a specific number of days old (in the Netherlands, by virtue of the Agricultural Quality Act, a period of 14 days is handled), on the basis of the weight of the young cheese, the protein content, and the fat content of the cheese milk, and conversion factors for protein and fat from the milk to the cheese. It does not prove easy to determine the relation between the weight of the young cheese and the conversion factors. Thus, a weight increase of the young cheese can mean that the moisture content in the cheese has increased, but it can also mean that the conversion of protein or fat has changed. It further holds that the conversion factors are, inter alia, dependent on the cheese type, the season, and the cheese preparation. As a result of these dependencies and the hardly determinable relation between the weight of the cheese and the conversion factors, the prediction is inaccurate.

In the mentioned cheese management system, use is made of the moisture content measured in a young cheese of the batch at an age of 14 days according to a destructive measuring method, on the basis of the mentioned Agricultural Quality Act in the Netherlands. More in detail, in this measuring method, a sample is taken from a cheese, often by staff members of a state control service, after which the moisture content of the sample is determined in a control laboratory. This actual determination can be used as an evaluation of the predicted value.

A drawback of this known cheese management system is that it is not possible to early control the process of cheese preparation in a reliable manner. For it is only after more than 14 days that factual measuring results imparting more reliability to a prediction are available. That is to say that the predicted values, because of the relatively great inaccuracy therein, give insufficient hold for the moisture content to change or adjust with sufficient certainty the cheese preparation process at a very early stage. Furthermore, it is not possible to carry out the cheese preparation process at an early stage on the basis of actually conducted measurements, because the young cheese is not very suitable therefor as regards consistency and moisture distribution. Not until after a number of days is a direct measurement possible, in which, for the rest, the cheese is lost. The measuring results are therefore known only after some days, so that on the basis thereof no direct adjustment in the process of cheese preparation is possible either. This means that, as a rule, large lots of cheese have already been produced before adjustment of the process can take place.

For completeness' sake, it is further observed that it is practically not possible for the determination of the moisture content of the cheese to take samples from the young cheese before it undergoes the brine treatment, because at this stage the young cheese consists mainly of a strongly inhomogeneous substance which still has little structure and coherence.

Another drawback of the employed measuring method according to the known cheese management system is that by taking a sample from the cheese not only the commercial value of that individual cheese is lost, but that for each cheese in the batch other values apply. Because of the individual differences in the cheeses, the measuring method therefore has the drawback of being insufficiently accurate; the sample need not be representative for the total batch or the day production of the cheese.

Examples of speculative and not yet developed methods in which measurements are made at cheeses already ripened to some extent, which measurements therefore apply as destructive measurements, will now follow.

In Food Marketing & Technology 16 (4) August 2002, pages 33-34 and 36, Millard describes measurements with near infrared technology. The article is directed to controlling and monitoring the moisture content of all kinds of foods by means of near infrared. It is stated that the material to be measured on-line must be powdered, crystalline, fibrous or flocculent, which points to transmission measurements. Reference is made to measurements at cheese in which, besides moisture content, the fat and protein contents may optionally also be determined. Many details are not given. These measurements are carried out at-line. The form the sample must have requires that the measurement can only be carried out if the cheese has a specific firm consistency. This, and the fact that the measurement is not carried out on-line but at-line, points to a destructive measurement.

For the rest, EP-A-0 038 254 also suggests a method. EP-A-0 038 254 discloses a method in which, inter alia, near infrared measurements are carried out at a curd in a side stream of the primary cheese preparation process.

An anonymous article in Dairy Industries International, Part 64, No. 4 (1996), page 21, also states that near infrared measurements are carried out only on cheese in ready condition. Reference is made to packaged cheese, and the embodiment shown on the photograph makes use of grated cheese.

Abstract No. 87-1-04-p0039 in Database FSTA "on line", referring to an article by Brenne in Meieriposten, 73, No. 14/15 (1984), 410-413, relates to analyses at dried milk and dried milk products. Moisture, fat and protein measurements can be carried out thereat with near infrared reflection techniques. It is speculated that in the future this technique can be useful for production control for, for instance, cheese preparation. At most a destructive measuring method is suggested.

It is an object of the invention to provide a method and an apparatus for preparing cheese in which at an early stage of the preparation process the moisture content of the young cheese can be determined in an accurate, at least more accurate manner, so that the process of cheese preparation can be controlled in a reliable manner at an early stage. In particular, it is an object of the invention to early determine the moisture content of a first batch of cheeses in a sufficiently accurate manner and, on the basis of these determined moisture contents, to adjust or otherwise control the process of cheese preparation for a next batch of cheeses.

According to the invention, this object is achieved by subjecting a young cheese, before the brine treatment takes place, to a non-destructive moisture measurement. The invention makes it possible at an early stage of the preparation to provide information about the moisture content of the cheese before brining, after which and with which it becomes possible to adjust the process of cheese preparation at a relatively early stage. It further holds that, because the measurement is non-destructive, the young cheese is not lost by the measurement, so that a relatively large number of measurements can be carried out without inconvenience to obtain a reliable determination of the moisture content. Moreover, the measurement can be carried out without requiring contact with the young cheese, with all the attendant advantages. In the case of a batch of young cheeses, it is, at least in principle, possible to carry out at each young cheese one or more moisture measurements. This not only contributes to the reliability of the determination, but may also give an insight into the distribution of the moisture content over the diverse young cheeses of the batch.

In this manner, the method, in particular where measurements are made at each cheese, makes it possible to better secure a constant and high quality. The risk of deviating moisture contents is reduced and hence also the risk of slit formation in the cross-section of the cheese; mold formation; deviations in consistency, such as too great a softness or pulpiness; and taste deviations, in particular to sour and bitter.

In a preferred embodiment, the non-destructive measuring method is carried out using reflective infrared spectroscopy and preferably reflective near infrared spectroscopy.

For the rest, Abstract No. 1999-00-p1350 in Database FSTA "on line", referring to a publication by Sorensen and Jepsen in the International Dairy Journal 8 (10.11)(1998), 863-871, points out the use of near infrared spectroscopy to make a prediction for the consistency and the taste characteristics of Danbo cheese. The cheeses subjected to a measurement are 5, 7, 9 and 11 weeks old. Reflection measurements gave better results than transmission measurements. The object of the measurements and the moment of measuring differ from the present method.

Furthermore, EP-A-0 668 020 teaches the use of microwaves for measuring the moisture content in "processed cheese".

FR-A-2 663 747 describes the monitoring of the renneting process in milk, in which, inter alia, infrared measurements can be carried out.

Finally, reference is made to a paper by Dahlin, presented at the "Second Biennial Marschall.... International Cheese Conference" held in Madison, Wisconsin (USA), on 15-18 September 1981, and printed in the "Proceedings from the Second Biennial Marschall International Cheese Conference" G (1981), Zikonix Corp., 224, Santa Ana Court, Sunnyvale, California 94086, USA, pages 362-368.

Dahlin makes two proposals for control systems for the cheese preparation process, which are still to be developed further. The first proposal relates to the non-conventional, continuous preparation of cheese using a whey separation tower and a drying apparatus. In this proposal, the moisture content is determined twice with X-ray reflection through the major part of a block-shaped cheese, before a trining step is carried out through brine injection. The first measurement is carried out after the cheese, when leaving the whey separation tower, has been formed. The value found is directly fed back to the computer controlling the temperature in the fermentation vessel. The second measurement is carried out after the drying apparatus. The signal found leads to adjustment of the drying time.

The only thing the (experimental) measuring system, for the rest, seems to admit is a direct moisture measurement and the feedback to the subsequent cheese preparation step in the special method for the cheese preparation to adjust the moisture content. Any connection with the development of the moisture content to the future is lacking.

The second proposal relates to a method for preparing Cheddar. This method is directed to the measurement of salt contents.

The method according to the invention makes it possible to early adjust the cheese preparation method on the basis of the moisture content determined for the young cheese before brining. From this it follows that it becomes possible to determine or control the moisture content of the cheese in a relatively accurate manner. This directly has an influence on the efficiency of the cheese preparation in comparison with known methods and therefore forms an important improvement of what is possible with the known cheese management system. To prepare cheese specialties with a high added value, the moisture content must be controllable within relatively narrow margins. The method according to the invention is therefore very suitable for preparing such cheese specialties. In this connection, cheese types like Kollumer, Slankie, and Cantenaar may be considered in particular. However, for large-scale production of "standard cheese", such as Gouda, Edammer and Maasdammer cheese, control for narrow margins is also (economically) very important.

The possibility of accurately controlling the moisture content of cheeses has the further advantage that the consequences of a deviating moisture content in the cheese, such as slit formation, mold formation, deviations in the consistency, and taste deviations are prevented.

Moreover, the accurate control of the moisture content of cheese may prevent government bodies, as in the Netherlands the Centraal Orgaan Kwaliteitsaangelegenheden in de Zuivel (COKZ) (Netherlands controlling authority for milk and milk products), from imposing fines to the cheesemaker because of exceedings of determined limit values for the moisture content of prepared cheeses, or may prevent economic damage from occurring otherwise, for instance through rejection of lots of cheese.

In an embodiment of the method according to the invention, the non-destructive moisture measurement comprises a reflection measurement of at least one reflection of a light beam directed to the young cheese, for instance an infrared light beam and preferably a near infrared light beam. Near Infrared Spectrometry (NIRS) is a technique derived from infrared spectrometry (IR) and is based on the principle that organic molecule compounds are set in vibration by means of near infrared light. The different compounds absorb light at characteristic wavelengths, so that qualitative analysis is possible. In the near infrared wavelength region (1100-2500 nm), inter alia the overtones and combination of vibrations of protein (-N-H), water (-O-H), and fat (-C-H) can be measured. By measuring the intensity of the (diffusely) reflected light, qualitative differences can also be determined by means of reflective NIRS.

More in detail, the moisture content in the young cheese can be determined on the basis of the measured reflection and a predetermined calibration model. The calibration model gives a connection between the moisture content in the young cheese and the reflection of the light beam, such as the infrared light beam.

Because the degree of reflection/transmission is not only determined by the chemical composition of the product, but also by the structural characteristics of the product (particle size, form, and density), an extensive set of calibration samples must be collected. Subsequently, by means of calculation techniques (MLR, PLS, ANN), models are set up with which unknown samples can be determined in a reliable, quantitative manner. To this end, reference is made to Scheutelkamp and Frankhuizen, VMT No. 1/2 (2001), 41-43.

A simple example of a calibration model is a calibration line. The mentioned calibration model may, for instance, be determined on the basis of the relation between the reflection of the (infrared) light beam from a penetration region of the beam into the cheese, the composition of the cheese in the penetration region, the composition of the whole cheese, and ambient factors, such as seasonal influences. By way of example, the invention will be elaborated below in more detail for near infrared measurements.

Depending on the intensity of the radiation source, the near infrared light beam will generally not penetrate much deeper into the young cheese than approximately 4 cm. The relation between the reflection of the infrared light beam from the penetration region, the composition of the cheese in the penetration region, and the composition in the whole cheese can be determined on the basis of experiments before the preparation of cheese takes place on an industrial scale, which relation can be adjusted on the basis of measurements carried out during production on an industrial scale.

For the measurement, a near infrared light beam with near infrared light can be used in the spectrum determined by the wavelengths 400-2500 [nm]. In particular, the present inventors have obtained very good results from measurements in the region about wavelength 1940 [nm] of the characteristic O-H combination band, and at overtones thereof, with the respective wavelengths in the region of 1450 [nm], 980 [nm], and 750 [nm].

According to an embodiment of a method according to the invention, it holds that, on the basis of the non-destructive moisture measurement, for instance with a prediction model, a value is determined for the moisture content of the young cheese after a period of a specific number of days after the start of preparation of the young cheese. This determination is compared with a predetermined reference value. The value determination is a function of, at least makes use of a number of parameters, such as the composition of the cheese, the time period over which prediction is made, ambient conditions, such as temperature and humidity. For instance, as a prediction model, a linear multi-regression model may be used (an example thereof is a PLS {Partial Least Squares} model with 4 factors). This PLS model is a description of the prediction model, an advanced kind of "calibration line" in the computer.

Often — at least in the Netherlands — the mentioned period of a number of days will be 14 days, so that the prediction applies to the moment when government bodies, such as the COKZ, take samples from some cheeses of the respective batch and carry out (destructive) moisture measurements thereon. In this case, the predetermined reference value is ideally equal to or near the measured value for the moisture content of the cheese. Preferably, it holds that according to the method according to the invention a first batch of young cheeses is prepared, while the prediction for at least one young cheese of the first batch is compared with the reference value, after which a second batch of young cheeses is prepared, while, if the mentioned prediction has a deviation with respect to the mentioned reference value greater than a predetermined margin, the preparation of the young cheeses of the second batch is adjusted on the basis of the prediction and the reference value. It is possible, for instance, that when the prediction is greater than the reference value, an additional amount of whey is pressed out of the mixture of the young cheeses of the second batch, so that the moisture content of the young cheeses of the second batch before brining is reduced with respect to the moisture content of the young cheeses of the first batch before brining.

According to a more advanced embodiment of the method according to the invention, it holds that at least practically each prepared young cheese is subjected to one or more non-destructive moisture measurements. According to this embodiment, accurate analysis and statistics can be carried out on the distribution of the moisture content of the diverse cheeses of a batch. Detailed information with respect to the distribution of the moisture content of the diverse cheeses can give a further insight into the preparation process and lead to improvements of the process for cheese preparation.

The invention further relates to an apparatus for preparing cheese, comprising a number of molds for receiving curd, a pressing system for pressing the curd into the respective molds to prepare young cheeses in the molds, a brine bath for brining young cheeses, and a measuring system for the non-destructive measurement of the moisture content of the batch of young cheeses, which measuring system is provided with at least one light source for generating a light beam and at least one sensor for measuring a reflection of the light beam on a young cheese irradiated by the light beam. With this apparatus, the method according to the invention can be carried out.

Preferably, the measuring system is a near infrared measuring system, the light source is a near infrared light source, and the light beam is a near infrared light beam. The near infrared measuring system may comprise a multi-channel spectrophotometer or a spectrometer with filters. With such measuring systems, a good signal/noise ratio can be achieved at a measuring time of a few seconds, for instance 5-15 seconds. With the measuring system, the moisture content in the young cheese can be determined in a hygienic, contactless manner according to a non-destructive measuring method.

An embodiment of the apparatus according to the invention is characterized in that the apparatus is also provided with a computer system for determining the moisture content of the cheeses on the basis of reflection measurements of irradiated young cheeses and a calibration model previously inputted in the computer system. On the basis of the determined moisture content of the batch, the moisture content of a next batch can be controlled by the computer system by, for instance, controlling the curd feeding system and/or the pressing system of the apparatus. In this manner, a very much automated production line for cheese with a very short feedback time is obtained. This makes it possible to effect with high reliability an accurate control of the moisture content of the cheeses. The computer system may be arranged to input and process potential destructive measuring results of moisture values of, for instance, 14 days old cheese. The computer system can compare these inputted measurements with the predictions determined by the computer system and, in case of structural deviations, realize a model adjustment and/or parameter adjustments of the prediction model.

The invention will now be explained in more detail with reference to the drawing, in which:

Fig. 1a is a diagrammatic, perspective representation of the preparation of a batch of young cheeses, while curd is brought by the feeding system into a number of molds;

Fig. 1b is a diagrammatic, perspective representation of the batch according to Fig. 1a, showing a pressing system for pressing the mixture into the respective molds;

Fig. 1c is a diagrammatic, perspective representation of an infrared measuring system for measuring the moisture content of a young cheese of the batch of cheeses according to Fig. 1a;

Fig. 2 is a diagrammatic side view of an infrared measuring system for determining the moisture content of a young cheese;

Fig. 3 shows a part of an apparatus for preparing cheese according to the invention, in which the infrared measuring system is coupled with a computer system of the apparatus;

Fig. 4 shows a top view of a cheese on which nine measuring positions for reflection measurements are shown;

Fig. 5 shows a histogram in which measurements of the relative humidity of cheeses in a batch of cheeses are represented;

Fig. 6 shows a histogram in which measurements of the relative humidity of cheeses in a batch of cheeses are shown; and

Fig. 7 shows a possible embodiment of a measuring apparatus with a measuring system according to the invention.

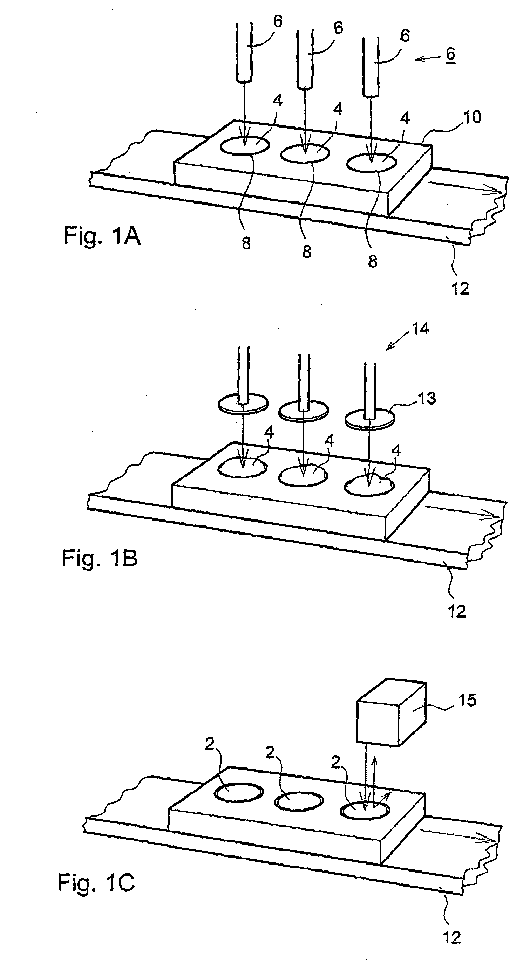

In Figs. 1a through 1c, a number of steps are diagrammatically shown for a known method for preparing cheese 2 from cheese milk, which cheese milk, under the influence of rennet, gives a mixture 4 of at least curd and whey. As shown in Fig. 1a, drained curd is fed via feeding tubes of the feeding system 6 for filling three respective molds 8. In this exemplary embodiment, the molds 8 are formed in a draining tray 10. In this example, the draining tray 10 is situated on a conveyor belt 12, by which, after filling the molds with the mixture, it can be moved to a pressing system 14 for pressing the mixture into the respective molds (see Fig. 1b). In this exemplary embodiment, the pressing system 14 comprises three pistons, to which pressing bodies 13 are attached to press mixture into the respective molds. By pressing, a batch of three young cheeses is formed in this case. After removing the cheeses, they are conveyed by the conveyor belt 12 to a near infrared measuring system 15, as indicated in Fig. 1c. By the near infrared measuring system 15, each young cheese can be subjected to a non-destructive moisture measurement to determine the moisture content in the young cheese. In this manner, the moisture content of the batch of young cheeses can be determined in a relatively accurate manner, after which the cheese can be subjected to a brine treatment not shown, as a rule by immersing the cheeses in a brine bath. After brining the batch of young cheeses, the batch can be stored in a cheese warehouse for the further ripening process.

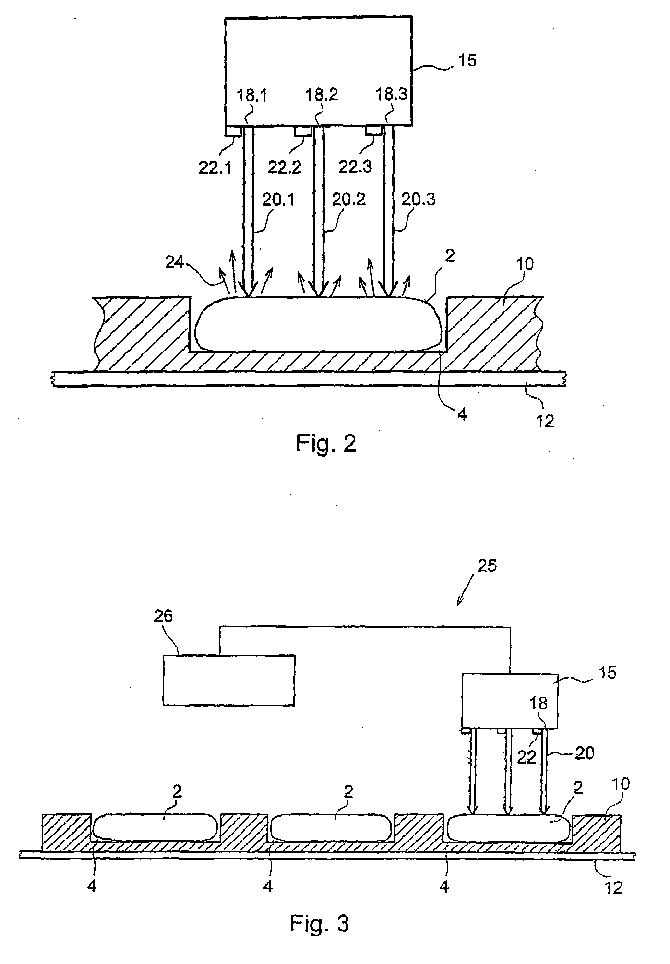

In Fig. 2, the near infrared measuring system 15 for measuring the moisture content of young cheeses 2 is shown in more detail. In this example, the near infrared measuring system 15 is provided with a near infrared light source 18. The near infrared light source 18 can generate a near infrared light beam 20, which is directed to the cheese 2. Furthermore, the infrared measuring system comprises a near infrared sensor 22 for measuring the reflection 24 of the near infrared light beams 20 on the cheese.

For the near infrared light beam 18 of the near infrared measuring system 15, a spectrum may be used which is defined by at least in the wavelength interval 400-2500 [nm]. With such infrared light beams, a penetration depth of approximately 4 [cm] in the cheese 2 can be obtained. From the whole penetration region into the cheese, reflections of the near infrared light beam 20 directed to the young cheese arise, which reflections can be measured with the sensor 22 of the measuring system 15. Because reflections from the whole penetration region are measured, a certain averaging over this region results. This increases the reliability of the measurements for uses such as the determination of the moisture content in the whole cheese. The moisture content in the young cheese is determined by comparing the measured reflections with predetermined calibration models. The calibration models give a connection between the reflections of an infrared light beam and the moisture content in the young cheese. These calibration models are experimentally determined before the process of industrial cheese preparation takes place. It is measured for a specific wavelength in the infrared spectrum what the reflection intensity of a light beam incident with a specific intensity is in dependence on the composition of the young cheese in the penetration region of the infrared light beam. Furthermore, in these experiments, the connection is determined between the composition of cheese in the penetration region and the composition of the whole cheese. This last relation is of importance because at this stage the young cheese is strongly inhomogeneous and relatively flowing.

As diagrammatically shown in Fig. 2, the reliability of the moisture determination (compared to a situation of measuring with one near infrared light beam only in one place) can be increased by carrying out near infrared reflection measurements in more places, for instance by directing more infrared light beams 20, preferably simultaneously, to the young cheese 2 and measuring the associated reflections 24. In this manner, measurements are carried out on different locations in the cheese, so that variations in the composition can be averaged. Further averaging can be obtained by moving the conveyor belt 12 during the measurements at a fixed, reproducible speed. It is observed that in order to obtain an advanced measuring system the respective light beams 20.i (i=1,2,3) may have different frequencies in the infrared spectrum. It is, for instance, possible to give the light beam 20.1 a wavelength of 1940 [nm] corresponding with an impact frequency of the O-H combination band and the light beam 20.2 a wavelength of 1450 [nm] (corresponding with a first overtone of the O-H combination band), and finally, the third light beam 20.3 a wavelength of 980 [nm] (corresponding with a second overtone of the O-H combination band). Following this, it is possible to provide the respective infrared sensors 22.i (i=1,2,3) with respective filters, so that each of the sensors is only sensitive in a limited (and for instance different) frequency band. In this manner, pairs of light sources 18.i and associated sensors 22.i (i=1,2,3) can be formed.

Instead of the above-discussed specific wavelengths of the respective light beams 20.i, it is also possible to select other wavelengths for the moisture measurement. The starting-point in this selection will be that for the determination of the moisture content of newly formed cheeses the interaction of water and protein (water binding) and the fat percentage is of importance. In this sense, it might perhaps be more correct to speak of water capacity, instead of moisture content. In this connection, it may be observed that the water capacity of cheeses with a high moisture content seems to be based on another physical/chemical relation than the water capacity of cheeses with an average moisture content.

As diagrammatically shown in Fig. 3, the infrared measuring system 15 of the apparatus 25 according to the invention is connected with a computer system 26. The computer system 26 is arranged to make, on the basis of the non-destructive moisture measurements carried out with the infrared measuring system 15, according to a prediction model, a prediction of the moisture content of the young cheese 2 after a period of at least a number of days after the start of preparation of the young cheese 2. To this end, the computer system 26 comprises a database which, before the industrial preparation of the cheeses takes place, can be loaded with information, such as the mentioned calibration models, and with the prediction model with predetermined parameters. The prediction model is a function of a number of parameters, such as the composition of the cheese, the time period over which prediction is made, ambient conditions, such as temperature and moisture content. Furthermore, the prediction model may comprise parameters with information about the cheese type to be prepared, specific characteristics of the production line for the specific cheese type, and data with respect to the season to process seasonal influences. The prediction model is, inter alia, dependent on the cheese type and the place of preparation and must therefore be based on empirical numbers from cheese management systems. The prediction model may be a multi-regression model.

The computer system 26 can compare the prediction with a predetermined reference value. The determined reference value may, for instance, correspond with guide values, as issued by controlling government bodies, such as the Netherlands COKZ, for the moisture content of 14 days old cheeses. If the prediction deviates from the reference value, then it is possible to change the process of cheese preparation, so that the moisture content of cheeses still to be prepared can be adjusted. Because the moisture content can be determined with the infrared measuring system 15 in a reliable manner, it is possible to generate accurate predictions with the computer system 26. It is thus also possible to control the moisture content of cheeses still to be prepared. The prediction according to the invention can be generated by the computer system 26 at an early stage by carrying out measurements at cheeses before the cheeses are brined. The apparatus according to the invention thus has a short feedback time, so that large amounts of cheeses with a deviating moisture content are prevented from having been produced already before intervention can be made in the preparation process.

In some processes of cheese preparation, the young cheese will be brined already after a few hours. This means that, on the basis of the moisture measurement just before brining, a feedback can be realized by the computer system 26 in the cheese preparation process already after a few hours, on the basis of the moisture measurements carried out by the infrared measuring system 15.

In particular, it is possible that a first batch of young cheeses is prepared, while the prediction for a young cheese of the first batch is compared with the reference value, after which a second batch of young cheeses is prepared, while, if the mentioned prediction has a deviation with respect to the mentioned reference value greater than a predetermined margin, the preparation of the young cheeses of the second batch is adjusted on the basis of the prediction and the reference value. Preferably, the computer system 26 is connected with the feeding system 6 and/or the pressing system 14. In this manner, a feedback can be realized in the process of cheese preparation via the computer system 26, while the computer system controls the pressing system 14 and/or the feeding system 6 to control the moisture content of the cheese. This may, for instance, mean that, if the mentioned prediction is greater than the reference value, during the pressing an additional amount of whey is pressed out of the curd 4 of the second batch, so that the moisture content just before brining the young cheeses 2 of the second batch is reduced with respect to the moisture content just before brining the young cheeses of the first batch.

In this place, it is observed that other feedbacks are also possible between the measured moisture contents and relevant preparation parameters, for instance by adjustment during the curd preparation.

The measuring system 15 is arranged to carry out a moisture measurement in an irradiated young cheese 2 within only a few seconds or less. This speed makes it possible, in principle, to subject all the cheeses of the batch to such a measurement. As diagrammatically shown in Fig. 3, the young cheeses are conveyed in molds 4 by the conveyor belt 12 under the near infrared measuring system. The belt 12 can be stopped for some time to carry out the measurement, but it is also possible to cause the belt to run further at an adjusted speed during the carrying out of the measurement by the measuring system 15. The measuring data are passed to the computer system 26 for further processing and storage in the database of the computer system 26.

During the industrial preparation of the cheeses, measuring data (for instance originating from COKZ) of the 14 days (or at least some days) old cheese can be inputted in the computer system 26. These measuring data can be compared by the computer system 26 with the generated predictions. On the basis of this comparison, the computer system can conduct, for instance, adjustments in the handled prediction model or parameters in this prediction model. In this manner, changing seasonal influences and/or changes in the production line can be automatically processed into the prediction model, so that next predictions can be carried out more accurately. It is further possible during the industrial preparation of the cheeses to input new reference values in the computer system 26, which reference values can optionally be substantially lower than the guide values legally obliged or conventional for quantitatively good cheeses. This option may be of importance if, unexpectedly, there are relatively great deviations between the predictions issued by the computer system 26 and the destructively measured moisture contents. For, in this case, it is possible according to this option to stay away, for safety's sake, somewhat farther from guide values, so that unallowed exceedings are avoided. Furthermore, the option may be of importance if, owing to, for instance, a technical failure, great fluctuations of the moisture content prove to occur in individual cheeses in a batch.

From the foregoing, it will be apparent that with the method and the apparatus according to the invention an accurate moisture determination of young cheeses can take place at an early stage, which, moreover, can be carried out in a rapid, contactless and hygienic manner. Preferably, use is made of a reflection measurement, but in this connection, it is observed that it is also possible to carry out transmission measurements for the moisture determinations. This is, for instance, possible with cheeses of a thickness up to 4 [cm].

The invention will now be explained in more detail with reference to the following, non-limiting examples.

**Example 1**

In a testing factory, Gouda cheeses were made on a small scale according to a conventional method by means of a draining tray 10. By controlling in the production parameters, such as drainage time and pressing pressure, cheeses were produced with some variation in the moisture content ($\pm 5$ %).

The curd in the draining tray 10 was divided into six equal blocks formed in vessels and pressed into square cheeses of approximately 7.5 kg. Before pressing, a 'cheese mark' was placed on the upper side (= mark side) of the cheese (not in the middle and not in the corners, but toward the edge). About 3 minutes after the cheese was removed from the vessel and placed on the conveyor belt 12 with the non-mark side up, reflection measurements were carried out at these cheeses with a measuring system 15, which, in this example, comprised an NIR spectrometer.

The movement of the cheeses (from vessel to spectrometer and to brine bath/reference measurement) was carried out while they were lying on the conveyor belt 12. In particular, the tests were made with a Zeiss Corona 45 NIR spectrometer. This spectrometer was placed above or beside the conveyor belt 12.

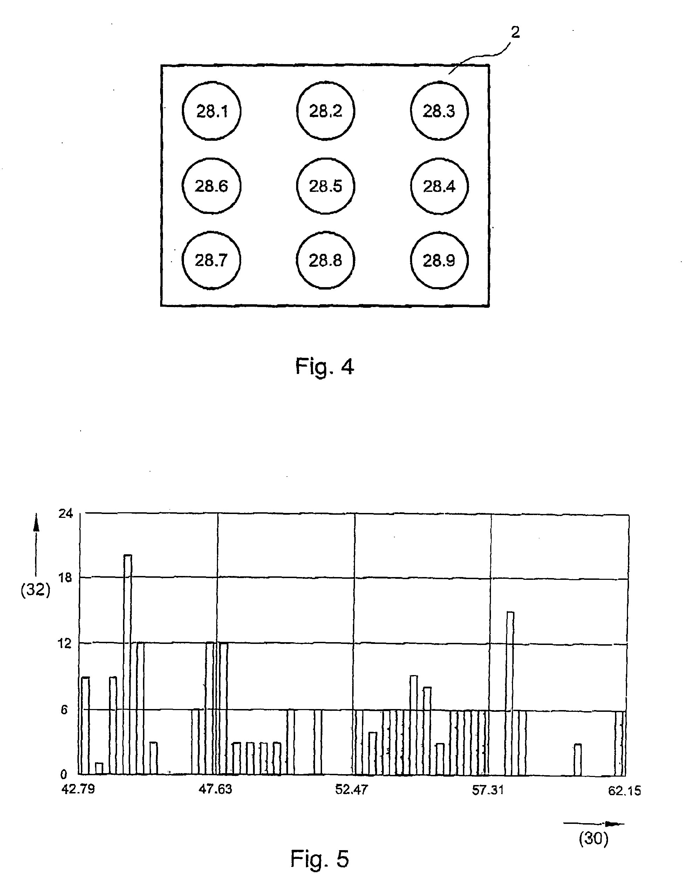

For each cheese, the reflection measurements were carried out in a uniform manner on the non-mark side and at nine determined positions. In Fig. 4, a cheese 2 is diagrammatically shown in top view. Fig. 4 shows a rectangular cheese 2 on which nine determined positions 28.1 through 28.9 for the reflection measurements are diagrammatically indicated.

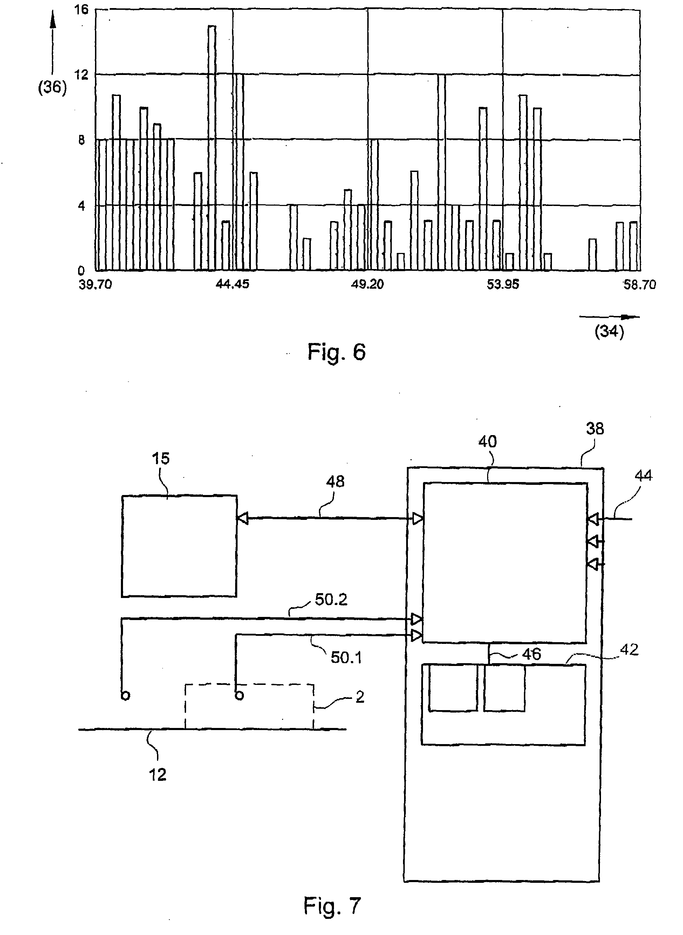

In total, 396 cheeses were measured with the NIR spectrometer, and of 198 cheeses the moisture content of the freshly pressed cheese was directly determined with the (destructive) reference moisture measurements (see also the description below), and of 198 cheeses the moisture content after brining was determined at an age of 14 days with a (destructive) moisture measurement. These measuring values are represented in Figs. 5 and 6. Fig. 5 shows a histogram, into which the moisture contents of the 198 cheeses determined on the basis of the reference measurements before brining are processed. In the histogram of Fig. 5, the relative moisture content is plotted along a horizontal axis in percents (30) of the cheeses, and the number of cheeses (32) with a determined moisture content is plotted along a vertical axis. The histogram in Fig. 6 shows the moisture contents of the other 198 cheeses determined after 14 days on the basis of the moisture measurements. Along a horizontal axis is plotted the relative moisture content in percents (34) and along a vertical axis the number of cheeses with a determined moisture content (36).

Hereinbelow, a possible measuring procedure with the measuring system 15 according to Fig. 7 will be explained in more detail. The measuring system 15 according to Fig. 7 is coupled with a processing unit 38 for automating the measuring procedure. The measuring system is coupled with a computer 42 via an interface 40. The computer 42 is provided with a database for, inter alia, storing the measurements. The interface 40 is coupled via a connection 44 with an (electric) feed and can optionally also be connected with an external network. The interface is also connected via a connection 46 with the computer 42 and via a connection 48 with the measuring system 15. Besides, the interface is directly or indirectly connected with the conveyor belt 12 via a connection 50.1, 50,2, with which the speed of the belt 12 can be controlled. The computer 42 is provided with a terminal and a display. Via the terminal, control commands can be inputted by a user (for instance to start the carrying out of measurements by the measuring system, and to start the conveyor belt).

Per cheese, nine measurements are conducted. To prevent nine file names from having to be inputted, these nine measurements are carried out in one so-called kinetic scan. Measurements are carried out in a fixed rhythm for a specific time.

Preferably, the cheese is moved over the conveyor belt 12 according to the same rhythm. Directly after completion of the measurement, the cheese can be moved to the next measuring place. When the measuring series has been completed, the program can ask for a file name under which to store the measuring data in the database.

If necessary, the measuring system 15 can be calibrated for each measuring session by means of calibration surfaces (such as white and black calibration surfaces). The calibration surfaces can be brought to a measuring place, after which a calibration reflection measurement can be carried out with the measuring system.

For the measuring system 15, the following adjustments can be handled. A measurement may be built up from 40 submeasurements, each of which submeasurements has a duration (integration time) of 24 [ms]. The employed wavelengths may be in the interval [944.96-1698.64] [nm].

The measuring system 15 is arranged such that the distance between the infrared light sources and the cheeses is adjustable. Per cheese, the distance is adjusted once to 15-20 [mm], depending on how hollow the cheese is. The Zeiss Corona 45 spectrometer has been made adjustable for height on a stand, and the cheeses are preferably measured at a distance of 18 [mm].

For a part of the cheeses, directly following the contactless, non-destructive measurement, the moisture content was determined with the (destructive) moisture measurement *(vide supra)*. The moisture content of the pressed cheese was determined before brining with the destructive examination method, which is internationally standardized (IDF 4A). Directly after the non-destructive reflection measurement, which usually takes at most ten seconds, the cheese is sampled, dried, and weighed. The freshly pressed cheese is weighed in whole and then cut into four quarters. One quarter is placed in a closable bucket, weighed, and stored for at least 40 hours at 7°C, the other quarters are removed from the tray, and the separated moisture of the whole cheese is weighed. After at least 40 hours, the cheese quarter is ground, and in the ground cheese the moisture content is determined conform to the standard method (IDF 4A). The separated moisture (drained whey) is quantified. From the measuring data, the average moisture content of the whole cheese is calculated. The moisture content of the whole cheese ('moisture cheese') is calculated by calculating the moisture content in the quarter and hence calculating the moisture content in the whole cheese:

$$\text{moisture sector \%} = ((\frac{\text{moisture ground cheese \%}}{100} * (\text{sector drainage whey bucket})) + \text{drainage whey bucket} * 0.95^1)* \frac{100\%}{\text{sector}}$$

$$\text{moisture cheese \%} = ((\frac{\text{moisture sector \%}}{100} * (\text{cheese drainage whey tray})) + \text{drainage whey tray} * 0.95^1)* \frac{100\%}{\text{cheese}}$$

([1] Assumption: dry matter in the whey = 5%)
wherein:

| | |
|---|---|
| moisture ground cheese | = the moisture content determined in the ground cheese according to IDF 4A (in %) |
| sector | = the weight of the cheese quarter placed in the closable bucket (in grams) |
| drainage whey bucket | = the weight of the drainage whey in the bucket after removing the cheese quarter after at least 40 hours (in grams) |
| moisture sector | = the moisture content in the sector calculated according to the above formula (in %) |
| cheese | = the weight of the whole cheese as taken from the production line (in grams) |
| drainage whey tray | = the weight of the drainage whey in the tray separated during the cutting of four quarters |
| moisture cheese | = the moisture content in the whole cheese calculated according to the above formula (%) |
| 0.95 | = correction factor for the moisture in the drainage whey determined after examination. |

Another part of the cheeses measured by the contactless, non-destructive NIRS method are brined and stored directly thereafter according to the normal method, after which at an age of 14 days a sample is taken according to IDF 50C, in which the moisture content is determined by means of the standard method IDF 4A.

By means of multivariable calculating techniques, models are set up with which unknown samples can be measured in line, non-destructively and contactlessly, and with which the moisture content of the freshly pressed cheese and of the cheese at an age of 14 days can be predicted.

The measuring data of the Corona 45 are converted by means of GRAMS/32 AI version 4.0 software (potential suppliers are Thermo Galactic, 395 Main Street, Salem, NH 03079 USA) into data sets (training sets) and preprocessed (normalization and conversion of spectra into derived spectra). By means of Galactic PLSplus/IQ software (potential suppliers are: also Thermo Galactic, 395 Main Street, Salem, NH 03079 USA), multivariable calculations are carried out. By means of PLS, the data set (n=198) of the average of all nine measurements per cheese are calculated through. Preceding all the calculations, the spectra are normalized by subtracting from all the spectra the average spectrum of the whole data set (Mean Center (MC)). Calculation is made with the crude spectra (MC), and by means of the second derived spectra with different gap size (MC + 2D 1,2,5,10 and 20). The gap is the number of data points over which the derivative is calculated (2D2 means that the derivative is calculated over two measuring points which, with the Corona, means 2 x 6 nm = 12 nm). The selection of data preprocessing and the number of factors is based on the decrease in the Standard Error of Cross Validation (SECV) in relation to the F ratio (an indication of the relative significance of an added factor) and visual interpretation of the contribution of the individual vectors to the reconstructed spectra and the factor weights of these vectors. As validation, the so-called "leaving out only one sample at a time" method is used. All the samples are predicted without forming part of the calibration set (per presented SECV, therefore, 198-1 calculations are carried out).

For the moisture determination, for the average data set of 1 through 9, a best fit was directly obtained with the second derived method and a gap of 5 (each time five measuring points are on an average = approximately 30 nm) with an SECV of 1.32% at four factors. For the moisture determination after 14 days, for the average data set of 1 through 9, an SECV of 1.24% was calculated, also by means of the second derived method (gap 5.4 factors).

## Example 2

By means of a measuring arrangement with an NIR spectrometer therein, in a cheese production company, moisture contents are measured with a contactless, non-destructive method. The cheeses are measured in-line in the production process after the cheese has been formed and removed from the vessel, and before the cheese is discharged into the brine bath. The cheeses roll along on a conveyor belt with the mark side down. At a measuring point, the cheese lies still, for instance for 8 seconds. In this period and at this position in the process, the measurement takes place by means of the NIR spectrometer. As an alternative, a measurement can be carried out on a moving cheese. During the measurement, the conveyor belt may have a relatively low speed (< 10 cm/sec).

The contactless, non-destructive measurement is carried out during the production of different, different in moisture content, cheeses (from $30^+$ through $48^+$) of approximately 16.5 kg with a rectangular form.

For developing a calibration model, 388 cheeses are measured with the NIR spectrometer. Of these cheeses, 110 are removed from the process directly afterwards and examined for the moisture content by means of the destructive measuring method. The other cheeses have followed the production process (brining, storing), after which of 278 cheeses the moisture content is determined at an age of 14 days. Table 1 gives a survey of cheese types for which models are determined.

Table 1 - Cheese types and numbers for setting up the calibration model for moisture content in freshly pressed cheese

| Type | Relative humidity % | Relative spreading % | Number |
|---|---|---|---|
| Foil $48^+$ | 43.08 - 44.49 | 1.41 | 20 |
| Nature $48^+$ | 45.29 - 47.67 | 2.38 | 20 |
| Foil Msd[1] $45^+$ | 42.14 - 44.72 | 2.58 | 20 |
| Nature $40^+$ | 48.31 - 51.51 | 3.20 | 20 |
| Foil $40^+$ | 46.45 - 49.05 | 2.60 | 20 |
| Foil $48^+$ LS[2] | 42.01- 42.78 | 0.77 | 10 |

[1] Msd: Maasdammer

[2] LS: Low salt

The following parameters variables for the calibration models are found herewith (based on 129 cheeses):

| | Model "new" | Model "as developed in Example 1" |
|---|---|---|
| R2 | 0.91 | 0.81 |
| SECV | 0.82 | 1.07 |
| N | 129 | 108 |
| Data | Mean Centering | Mean Centering |
| Pretreatment | $2^{nd}$ derived gap 10 | $2^{nd}$ derived gap 10 |
| Number of PLS factors | 4 | 2 |

This is the result obtained with the cheeses from the above-mentioned type table and the given software settings: data pretreatment and PLS. Model "new" shows the model improved and adjusted in this manner for the respective production location, in comparison with the use of the prediction model as developed in Example 1.

The calibration model for predicting the moisture content of freshly pressed cheese is validated with avahd.ationset of 59 cheeses.

Table 2 - Cheese types and numbers for the validation of the newly calculated calibration model

| Type | Relative humidity % | Relative spreading % | Number |
| --- | --- | --- | --- |
| 1. Foil 48+ | 43.33 - 46.00 | 2.67 | 20 |
| 2. Nature 48+ | 47.17 - 48.53 | 1.36 | 10 |
| 3. Foil Msd 45+ | 44.46 - 45.49 | 1.03 | 10 |
| 4. Nature 40+ | 50.30 - 52.15 | 1.85 | 10 |
| 5. Foil 40+ | 47.49 - 48.34 | 0.85 | 9 |

The above table gives the data (characteristics) about the cheeses used for the validation set. The statistic result after processing with the software is given below.

For this validation set of 59 cheeses, the following statistic results were obtained:

| | |
| --- | --- |
| $R^2$ | 0.86 |
| SEP | 0.94 |
| Bias (average difference) | 0.27 |
| Slope (direction) | 0.856 |
| Intercept (intersection) | 6.495 |

Finally, it is observed that the invention is not limited to the discussed embodiments. Thus, it is also possible to use other numbers of (infrared) light sources and/or sensors, while the number of sensors need not be equal to the number of light sources. It further holds that a light source may be both monochromatic and non-monochromatic, and that the sensors may be provided with filters corresponding therewith. Filters may also be used to limit failures of ambient light. These and other aspects are considered for those skilled in the art to be obvious variations of the discussed embodiments.

**Claims**

1. A method for preparing hard and semi-hard type cheese, wherein a young cheese is formed from curd, which young cheese is subjected to a brine treatment, which young cheese, before the brine treatment takes place, is subjected to a non-destructive moisture measurement and wherein on the basis of the non-destructive moisture measurement a value is determined for the moisture content of the young cheese after a period of a number of days after the start of preparation of the young cheese.

2. A method according to claim 1, wherein the non-destructive moisture measurement is a reflection measurement of at least one reflection of a light beam directed to the young cheese, and preferably a near infrared light beam.

3. A method according to claim 2, wherein the moisture content in the young cheese is determined on the basis of the measured reflection and a predetermined calibration model, which calibration model comprises a connection between the moisture content in the young cheese and the reflection of the light beam.

4. A method according to claim 1, wherein the value determined on the basis of the non-destructive moisture measurement is compared with the actual moisture content after the mentioned period, on the basis of which comparison the preparation of the young cheeses of a next batch is adjusted, if required.

5. A method according to any one of the preceding claims, wherein of each batch of cheese to be prepared, at least practically, each prepared young cheese is subjected to the non-destructive moisture measurement.

6. An apparatus for preparing cheese, comprising a number of molds for receiving curd, a pressing system for the curd in the respective molds to prepare young cheeses in the molds, a brine bath for brining the batch of young cheeses, and a measuring system, preferably a near infrared measuring system, for measuring the moisture content of the young cheeses before the brine bath, which measuring method is provided with at least one light source for generating a light beam and at least one sensor for measuring a reflection of the light beam on a young cheese irradiated by the light beam.

7. An apparatus for preparing cheese according to claim 6, wherein the apparatus is also provided with a computer system for determining the moisture content of the cheeses on the basis of reflection measurements of irradiated young cheeses and a calibration model previously inputted in the computer system.

8. An apparatus for preparing cheese according to claim 7, wherein the computer system is arranged to control, on the basis of the determined moisture content of the cheeses, the moisture content of a next batch of cheese to be prepared by adjusting the curd composition and/or the pressing system.

9. An apparatus according to claim 8, wherein the computer system is arranged to carry out a moisture measurement at least for practically each young cheese before it undergoes a brine treatment, and to store the determined moisture content in a database of the computer system.

**Patentansprüche**

1. Verfahren zur Zubereitung von hartem und halbweichem Käse, wobei ein junger Käselaib aus geronnener Milch geformt wird, wobei der junge Käselaib einer Laugenbehandlung unterworfen wird, wobei der junge Käselaib, bevor die Laugenbehandlung stattfindet, einer zerstörungsfreien Feuchtigkeitsbehandlung unterworfen wird und wobei auf Grundlage der zerstörungsfreien Feuchtigkeitsbehandlung ein Wert für den Feuchtigkeitsgehalt des jungen Käselaibs nach einem Zeitraum von mehreren Tagen nach Beginn der Zubereitung des jungen Käselaibs bestimmt wird.

2. Verfahren nach Anspruch 1, wobei die zerstörungsfreie Feuchtigkeitsbehandlung eine Reflexionsmessung mindestens einer Reflexion eines auf den jungen Käselaib gerichteten Lichtstrahl und bevorzugt eines Lichtstrahls im nahen Infrarotbereich ist.

3. Verfahren nach Anspruch 2, wobei der Feuchtigkeitsgehalt im jungen Käselaib auf Grundlage der gemessenen Reflexion und eines vorbestimmten Kalibrierungsmodells gemessen wird, wobei das Kalibrierungsmodell eine Verbindung zwischen dem Feuchtigkeitsgehalt im jungen Käselaib und der Reflexion des Lichtstrahls umfasst.

4. Verfahren nach Anspruch 1, wobei der auf Grundlage der zerstörungsfreien Feuchtigkeitsmessung bestimmte Wert nach dem genannten Zeitraum mit dem tatsächlichen Feuchtigkeitsgehalt verglichen wird, wobei auf Grundlage dieses Vergleichs wenn nötig die Zubereitung der jungen Käselaibe einer nächsten Charge angepasst wird.

5. Verfahren nach einem der vorangehenden Ansprüche, wobei zumindest praktisch jeder zubereitete junge Käselaib jeder zuzubereitenden Käsecharge der zerstörungsfreien Feuchtigkeitsmessung unterzogen wird.

6. Vorrichtung zur Zubereitung von Käse, umfassend mehrere Formen zur Aufnahme von geronnener Milch, ein Presssystem für die geronnene Milch in den jeweiligen Formen, um junge Käselaibe in den Formen zuzubereiten, ein Laugenbad zur Laugenbehandlung der Charge von jungen Käselaiben, und ein Messsystem, bevorzugt ein Nahinfrarotmesssystem, zur Messung des Feuchtigkeitsgehalts der jungen Käselaibe vor dem Laugenbad, wobei die Messmethode mit mindestens einer Lichtquelle zur Erzeugung eines Lichtstrahls und mindestens einem Sensor zur Messung einer Reflexion des Lichtstrahls auf einem von dem Lichtstrahl beleuchteten jungen Käselaib versehen ist.

7. Vorrichtung zur Zubereitung von Käse nach Anspruch 6, wobei die Vorrichtung auch mit einem Computersystem zur Bestimmung des Feuchtigkeitsgehalts der Käselaibe auf Grundlage der Reflexionsmessungen der beleuchteten jungen Käselaibe und eines zuvor in das Computersystem eingegebenen Kalibrierungsmodells versehen ist.

8. Vorrichtung zur Zubereitung von Käse nach Anspruch 7, wobei das Computersystem so ausgestaltet ist, dass es auf Grundlage des bestimmten Feuchtigkeitsgehalts der Käselaibe den Feuchtigkeitsgehalt einer nächsten zuzubereitenden Käsecharge steuert, indem die Zusammensetzung der geronnenen Milch und/oder das Drucksystem eingestellt werden.

9. Vorrichtung nach Anspruch 8, wobei das Computersystem so ausgestaltet ist, dass es eine Feuchtigkeitsmessung zumindest für praktisch jeden jungen Käselaib durchführt, bevor er eine Laugenbehandlung erfährt, und dass es den bestimmten Feuchtigkeitsgehalt in einer Datenbank des Computersystems speichert.

**Revendications**

1. Procédé pour préparer du fromage à pâte dure ou semi-dure, dans lequel un fromage jeune est formé à partir de caillé, lequel fromage jeune est soumis à un traitement de saumure, lequel fromage jeune, avant que le traitement de saumure n'ait lieu, est soumis à une mesure d'humidité non destructrice et dans lequel en fonction de la mesure d'humidité non destructrice, on détermine une valeur pour la teneur en humidité du fromage jeune après une période d'un certain nombre de jours après le début de la préparation du fromage jeune.

2. Procédé selon la revendication 1, dans lequel la mesure d'humidité non destructrice est une mesure de réflexion d'au moins une réflexion d'un faisceau lumineux dirigé vers le fromage jeune, et de préférence un faisceau lumineux proche de l'infrarouge.

3. Procédé selon la revendication 2, dans lequel la teneur en humidité dans le fromage jeune est déterminée en fonction de la réflexion mesurée et d'un modèle d'étalonnage prédéterminé, lequel modèle d'étalonnage comprend une connexion entre la teneur en humidité dans le fromage jeune et la réflexion du faisceau lumineux.

4. Procédé selon la revendication 1, dans lequel la valeur déterminée en fonction de la mesure d'humidité non destructrice est comparée avec la véritable teneur en humidité après la période mentionnée, en fonction de laquelle comparaison, la préparation des fromages jeunes d'un lot suivant est ajustée, si nécessaire.

5. Procédé selon l'une quelconque des revendications précédentes, dans lequel parmi chaque lot de fromages à préparer, au moins pratiquement chaque fromage jeune préparé est soumis à la mesure d'humidité non destructrice.

6. Appareil pour préparer du fromage, comprenant un certain nombre de moules pour recevoir le caillé, un système de pression pour le caillé dans les moules respectifs afin de préparer les fromages jeunes dans les moules, un bain de saumure pour soumettre le lot de fromages jeunes à la saumure, et un système de mesure, de préférence un système de mesure proche de l'infrarouge pour mesurer la teneur en humidité des fromages jeunes avant le bain de saumure, lequel procédé de mesure est fourni avec au moins une source lumineuse pour générer un faisceau lumineux et au moins un capteur pour mesurer une réflexion du faisceau lumineux sur le fromage jeune irradié par le faisceau lumineux.

7. Appareil pour préparer du fromage selon la revendication 6, dans lequel l'appareil est également doté d'un système informatique pour déterminer la teneur en humidité des fromages en fonction des mesures de réflexion des fromages jeunes irradiés et un modèle d'étalonnage préalablement introduit dans le système informatique.

8. Appareil pour préparer du fromage selon la revendication 7, dans lequel le système informatique est agencé pour contrôler, en fonction de la teneur en humidité déterminée des fromages, la teneur en humidité d'un lot de fromages suivant à préparer en ajustant la composition du caillé et/ou le système de pression.

9. Appareil selon la revendication 8, dans lequel le système informatique est agencé pour réaliser une mesure d'humidité d'au moins pratiquement chaque fromage jeune avant qu'il ne subisse un traitement de saumure et pour stocker la teneur en humidité déterminée dans une base de données du système informatique.

Fig. 1A

Fig. 1B

Fig. 1C

Fig. 2

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0038254 A
- EP 0668020 A
- FR 2663747 A

### Non-patent literature cited in the description

- *Food Marketing & Technology,* August 2002, vol. 16 (4), 33-3436
- *Dairy Industries International,* 1996, vol. 64 (4), 21
- **BRENNE.** *Meieriposten,* 1984, vol. 73 (14/15), 410-413
- **DAHLIN.** Second Biennial Marschall.... International Cheese Conference. *Madison, Wisconsin (USA,* 15 September 1981
- Proceedings from the Second Biennial Marschall International Cheese Conference. *Zikonix Corp.,* 1981, vol. 224, 362-368
- **SCHEUTELKAMP ; FRANKHUIZEN.** *VMT,* 2001, vol. 1 (2), 41-43